# EUROPÄISCHE PATENTSCHRIFT

(11) **EP 1 425 563 B1**
(45) Veröffentlichungstag und Bekanntmachung des Hinweises auf die Patenterteilung: **16.01.2008**
(21) Anmeldenummer: 02760326.5
(22) Anmeldetag: 24.08.2002
(51) Int. Cl.: G01L 19/06, G01L 7/08

(54) **DRUCKMESSGERÄT**
PRESSURE MEASURING APPARATUS
APPAREIL DE MESURE DE PRESSION

(30) Priorität: 07.09.2001 DE 10144230
(43) Veröffentlichungstag der Anmeldung: 09.06.2004
(73) Patentinhaber: Endress + Hauser GmbH + Co. KG, 79689 Maulburg (DE)
(72) Erfinder: ROSSKOPF, Bernd, 79688 Hausen i.W. (DE); BERNAUER, Andreas, 79650 Schopfheim (DE)
(74) Vertreter: Andres, Angelika Maria
(86) Internationale Anmeldenummer: PCT/EP2002/009480
(87) Internationale Veröffentlichungsnummer: WO 2003/025534

(56) Entgegenhaltungen:
- EP-A- 0 001 188
- DE-A- 19 949 831

## Beschreibung

Die Erfindung betrifft ein Druckmeßgerät mit einem Meßelement und einem dem Meßelement vorgeschalteten mit einer Druck übertragenden Flüssigkeit gefüllten Druckmittler mit einer den Druckmittler abschließenden Membran, auf die im Betrieb ein zu messender Druck p einwirkt.

In der Druckmeßtechnik werden sehr häufig Druckmittler eingesetzt. Durch einen Druckmittler wird erreicht, daß das Meßelement nicht mit einem Medium, dessen Druck gemessen werden soll, in Berührung kommt. Dies ist z.B. bei chemisch und/oder mechanisch empfindlichen Meßelementen, z.B. Halbleiter-Chips, erforderlich. Zusätzlich werden Druckmittler eingesetzt, wenn am Meßort sehr hohe Temperaturen herrschen, die das Meßelement und/oder eine daran angeschlossene elektronische Einheit zur Aufnahme und/oder Verarbeitung von von dem Meßelement generierten Signalen des Meßelements beeinträchtigen oder sogar zerstören könnten.

Damit Druckmittler einen auf sie einwirkenden Druck möglichst unverändert übertragen, werden vorzugsweise dünne Membranen eingesetzt. Je nach Größe der zu erfaßenden Drücke werden Membranen mit einer Dicke von z.B. 0,01 mm bis 0,2 mm eingesetzt. Derart dünne Membranen sind empfindlich gegenüber Korrosion, mechanischer Beschädigung, Abrasion etc. Eine Beschädigung der Membran wird oft erst bemerkt, wenn das nachgeschaltete Meßelement beschädigt wird und ausfällt. Dann ist aber in der Regel bereits die Flüssigkeit, mit der der Druckmittler gefüllt ist, ausgetreten.

Ein bekanntes Druckmeßgerät wird in DE 19949831 A1 offenbart.

Herkömmliche Druckmeßgeräte arbeiten mit einem Leck in der Membran weiter. Es kann einige Zeit vergehen, bis der Betreiber die Beschädigung bemerkt. In dieser Zeit können sich im Bereich der Beschädigung Verunreinigungen ablagern, die bei einer Reinigung nicht vollständig entfernt werden. Dies kann insb. in der Lebensmittelindustrie zu Problemen führen. Es könne sich z.B. Bakterien ansammeln.

Es ist eine Aufgabe der Erfindung, ein Druckmeßgerät anzugeben, das ein hohes Maß an Sicherheit bietet.

Hierzu besteht die Erfindung in einem Druckmeßgerät gemäß Anspruch 1.

Gemäß einer zweiten Ausgestaltung der Weiterbildung weist die Überwachungseinheit einen Kondensator auf, der eine auf der zweiten Membran angeordnete Elektrode aufweist, und dessen Kapazität von einem Abstand zwischen der ersten und der zweiten Membran abhängt.

Gemäß einer Weiterbildung ist der Zwischenraum zwischen der ersten und der zweiten Membran mit einer Flüssigkeit gefüllt, und die von der Überwachungseinheit überwachte Veränderung ist eine Änderung einer Konsistenz der Flüssigkeit.

Gemäß einer anderen Ausgestaltung der letztgenannten Weiterbildung weist die Überwachungseinheit einen optischen Sensor auf, der dazu dient eine Veränderung eines Brechungsindexes der Flüssigkeit oder eines Trübungsgrades der Flüssigkeit festzustellen.

Gemäß einer weiteren Ausgestaltung der letztgenannten Weiterbildung weist die Überwachungseinheit einen optischen Sensor auf, der dazu dient eine Veränderung einer Laufzeit eines optischen Signals vom optischen Sensor zur zweiten Membran und zurück zu ermitteln.

Gemäß einer Weiterbildung
- weist die zweite Membran einen größeren Durchmesser auf als die erste Membran, und
- die zweite Membran weist einen äußeren ringscheibenförmigen Rand auf, der einer an die erste Membran angrenzenden ringscheibenförmigen Oberfläche des Druckmittlers gegenüber liegt,
   -- wobei der von dem Rand eingeschlossene Teil des Zwischenraums zwischen der ersten und der zweiten Membran mit einem Feststoff gefüllt ist, und
- die Überwachungseinheit einen durch den äußeren Rand der zweiten Membran definierten Randbereich auf durch eine Zerstörung der zweiten Membran verursachte Veränderungen überwacht.

Die Überwachungseinheit weist einen Kondensator auf, der eine auf dem Rand der zweiten Membran angeordnete Elektrode aufweist, und dessen Kapazität von einem Abstand zwischen dem Rand und der gegenüberliegenden Oberfläche des Druckmittlers abhängt.

Die Erfindung und weitere Vorteile werden nun anhand der Figuren der Zeichnung, in denen fünf Ausführungsbeispiele dargestellt sind, näher erläutert. Gleiche Elemente sind in den Figuren mit den gleichen Bezugszeichen versehen.
Fig. 1 zeigt schematisch einen Schnitt durch ein Druckmeßgerät mit einem Druckmittler mit einer ersten und einer zweiten Membran und einer Überwachungseinheit, die einen zwischen der ersten und der zweiten Membran bestehenden Zwischenraum überwacht;
Fig. 2 zeigt schematisch einen Ausschnitt des in Fig. 1 dargestellten Druckmeßgeräts, wobei der
   der Zwischenraum evakuiert ist und die Überwachungseinheit einen Druckschalter aufweist;
Fig. 3 zeigt schematisch einen Ausschnitt des in Fig. 1 dargestellten Druckmeßgeräts, wobei der
   der Zwischenraum evakuiert ist und die Überwachungseinheit einen Kondensator aufweist;
Fig. 4 zeigt schematisch einen Ausschnitt des in Fig. 1 dargestellten Druckmeßgeräts, wobei der
   der Zwischenraum mit einer Flüssigkeit gefüllt ist und die Überwachungseinheit einen optischen Sensor aufweist;
Fig. 5 zeigt schematisch einen Ausschnitt des in Fig. 1 dargestellten Druckmeßgeräts, wobei zwischen der ersten und der zweiten Membran ein Feststoff eingebracht ist, der verbleibende freie Teil
   des Zwischenraum evakuiert ist und die Überwachungseinheit einen Druckschalter aufweist;
   und
Fig. 6 zeigt schematisch einen Ausschnitt des in Fig. 1 dargestellten Druckmeßgeräts, wobei zwischen der ersten und der zweiten Membran ein Feststoff eingebracht ist, der verbleibende freie Teil
   des Zwischenraum evakuiert ist und die Überwachungseinheit einen Kondensator aufweist;

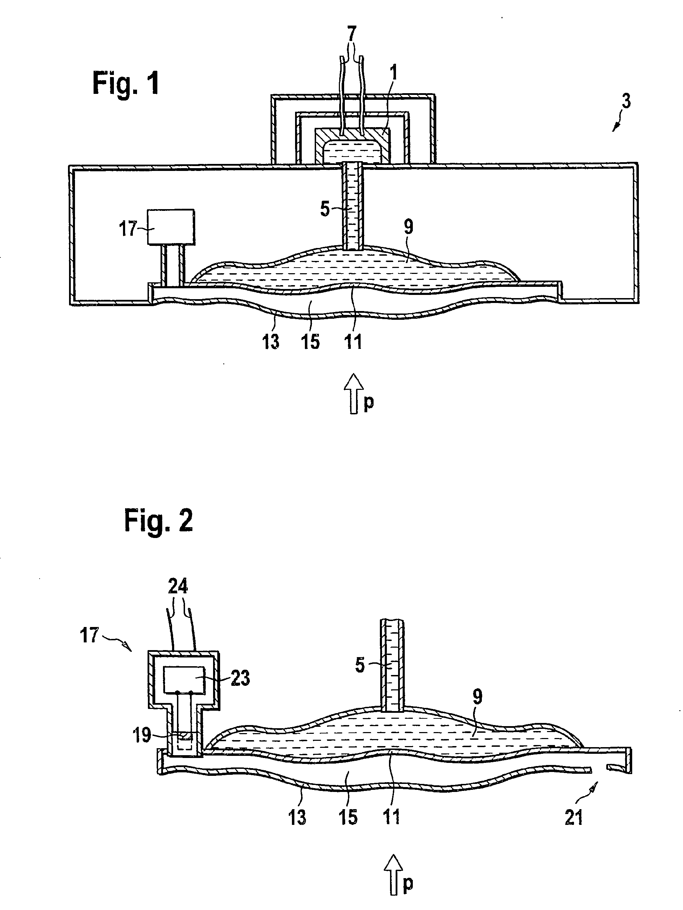

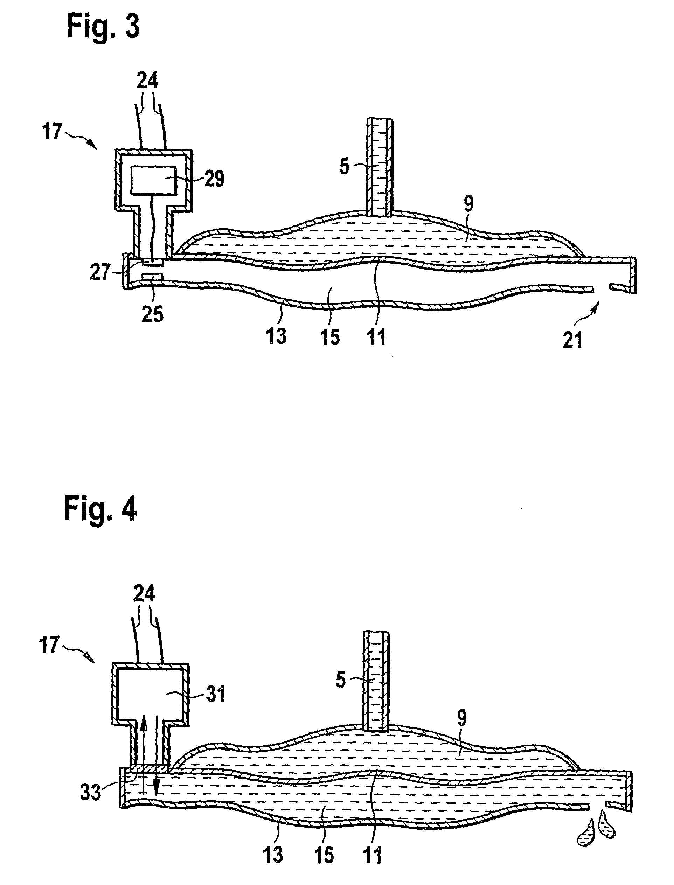

Ausführungsbeispiele der Erfindung werden nur in Fig. 4 bis 6 gezeigt. Fig. 1 bis 3 beziehen sich lediglich auf illustrative Beispiele.

Fig. 1 zeigt einen Schnitt durch ein schematisch dargestelltes Druckmeßgerät. Es weist ein Meßelement 1 auf, dem ein Druckmittler 3 vorgeschaltet ist. Der Druckmittler 3 bewirkt im Betrieb eine Übertragung eines auf den Druckmittler 3 einwirkenden zu messenden Druckes auf das Meßelement 1.

Das Meßelement 1 ist in dem dargestellten Ausführungsbeispiel eine Membran aus einem Halbleiter. Die Membran ist brückenförmig ausgebildet und unmittelbar auf einer Rückseite des Druckmittlers 3 aufgebracht. Durch eine den Druckmittler 3 durchdringenden Bohrung 5 wird der Membran im Betrieb ein zu messender Druck zugeführt. Ein auf die Membran einwirkender Druck bewirkt eine druckabhängige Auslenkung der Membran, die mittels eines elektromechanischen Wandlers, z.B. in die Membran eindotierte Widerstandselemente, erfaßt und in ein druck-abhängiges elektrisches Signal umgewandelt wird. Selbstverständlich können auch andere Sensorarten eingesetzt werden. Das elektrische Signal ist über Anschlußleitungen 7 einer weiteren Verarbeitung und/oder Auswertung zugänglich.

Der Druckmittler 3 weist einen zylindrischen massiven Block, z.B. aus einem Stahl, auf, in dessen Mitte die Bohrung 5 verläuft. An einer von dem Meßelement 1 abgewandten Seite weist der Druckmittler 3 eine Kammer 9 auf. Die Bohrung 5 mündet in die Kammer 9 und die Kammer 9 ist mittels einer ersten Membran 11 abgeschlossen. Die Kammer 9, die Bohrung 5 und ein dem Druckmittler 3 zugewandter Innenraum des Meßelements 1, hier der von der brückenformigen Membran eingeschlossene Raum, sind mit einer möglichst inkompressiblen Flüssigkeit, z.B. einem Silikonöl, gefüllt. Die Flüssigkeit dient dazu einen auf die erste Membran 11 einwirkenden Druck auf das Meßelement 1 zu übertragen.

Unmittelbar auf einer meßelement-abgewandten Seite der ersten Membran 11 ist eine zweite Membran 13 angeordnet. Die zweite Membran 13 verläuft parallel zu der ersten Membran 11. Zwischen der ersten und der zweiten Membran 11, 13 besteht ein Zwischenraum 15, der durch die erste und die zweite Membran 11,13 begrenzt ist. Weist die zweite Membran 13, wie in dem dargestellten Ausführungsbeispiel dargestellt, einen größeren Durchmesser auf, so ist der Zwischenraum 15 zusätzlich durch eine ringscheiben-förmige Oberfläche des Druckmittlers 3 begrenzt, der die erste Membran 11 umgibt.

Die erste und die zweite Membran 11, 13 bestehen z.B. aus einem Edelstahl und können z.B. durch eine Schweißung an deren äußerem kreisförmigen Rand mit dem Druckmittler 3 verbunden sein. Im Betrieb liegt der zu messende Druck p auf der zweiten Membran 13 an, wird durch diese auf die erste Membran 11 und von dort durch die Flüssigkeit auf das Meßelement 1 übertragen.

Es ist eine Überwachungseinheit 17 vorgesehen, die den Zwischenraum 15 auf durch eine Zerstörung der zweiten Membran 13 verursachte Veränderungen überwacht.

Gemäß einer ersten Variante ist der Zwischenraum 15 zwischen der ersten und der zweiten Membran 11, 13 evakuiert. Hierdurch sind die beiden Membranen 11 und 13 mechanisch aneinander gekoppelt und es besteht eine nur sehr geringe Rückwirkung der zweiten Membran 13 auf die Druckmessung.

Alternativ kann die zweite Membran 13 auch mit der ersten Membran 11 mechanisch verbunden sein, z.B. mit ihr verschweißt sein.

Im Normalbetrieb liegt die zweite Membran 13 durch das Vakuum eng an der ersten Membran 11 und der ringscheiben-förmigen Oberfläche des Druckmittlers 3 an. Wird die zweite Membran 13 undicht oder sogar völlig zerstört, so wird das Vakuum aufgehoben. Als Beispiele für eine mögliche Beschädigung und/oder Zerstörung der zweiten Membran 13 seien hier Abrasion und Korrosion genannt.

Die von der Überwachungseinheit 17 überwachte Veränderung ist hier eine Aufhebung des Vakuums. Als Überwachungs-einheit 17 eignet sich z.B. ein Druckschalter 19, der dazu dient, einen Druckanstieg im Zwischenraum 15 zu erfassen. Dabei genügt ein einfacher Schalter, der durch einem bestimmten darauf einwirkenden Druck, dessen Wert größer als ein vorgegebener schalterspezifischer Schwellwert ist, geschaltet wird.

In Fig. 2 ist ein vergrößerter Ausschnitt des in Fig. 1 dargestellten Druckmeßgeräts, der die erste und die zweite Membran 11, 13 und die Überwachungseinheit 17 enthält dargestellt. Die zweite Membran 13 ist bei dem in Fig. 2 dargestellten Druckmeßgerät beschädigt. Sie weist einen Riß 21 auf. Das Vakuum ist also zerstört und im Zwischenraum wirkt der zu messende Druck p. Dieser Druck p liegt oberhalb des Schwellwerts. Entsprechend ist der Druckschalter 19 eingedrückt. Eine Schalterposition, die einem nicht eingedrückten Druckschalter 19 entspricht, ist in Form einer gestrichelten Linie eingezeichnet. An den Druckschalter 19 ist eine elektronische Schaltung 23 angeschlossen, die dazu dient, zu erkennen, ob der Druckschalter 19 geöffnet oder geschlossen ist. Dies kann z.B. eine einfache Widerstandsmeßschaltung sein, die einen Widerstand des Druckschalter 19 mißt. Die elektronische Schaltung 23 weist Anschlußleitungen 24 auf, über die ein einem Druckschalterzustand entsprechendes Signal einer weiteren Verwendung zur Verfügung steht. Es kann z.B. eingesetzt werden, um die Beschädigung zu melden und/oder einen Alarm auszulösen.

Durch die Überwachungseinheit 17, hier den Druckschalter 19 wird die Beschädigung sofort erkannt, ohne daß Aufwendige Wartungen und/oder Meßgerätkontrollen durchgeführt werden müssen. Dabei bietet die erste Membran 11, die ja noch intakt ist, die Sicherheit, daß keine Flüssigkeit aus dem Druckmittler 3 austritt. Ist die zweite Membran 13 beschädigt oder zerstört worden, so steht dem Betreiber des Druckmeßgeräts ein Zeitraum zur Behebung des Schadens zur Verfügung, da die erste Membran 11 noch völlig intakt ist. Erst wenn die Gefahr besteht, daß die durch die Beschädigung oder Zerstörung der zweiten Membran 13 nun freiliegende erste Membran 11 ebenfalls Schaden nimmt, besteht die Gefahr, daß die Flüssigkeit austritt.
Ist die Beschädigung oder Zerstörung z.B. durch Korrosion oder einen anderen langsam ablaufenden Vorgang verursacht worden, so kann der Betreiber eine Mindestlebensdauer der zweiten Membran 13 bestimmen und daraus einen Richtwert für den zur Behebung des Schadens zur Verfügung stehenden Zeitraum ermitteln. Gerade bei großen Anlagen in denen eine Vielzahl von Druckmeßgeräten eingesetzt werden, kann hierdurch die Wartung bzw. die Schadensbehebung sehr viel ökonomischer gestaltet werden.

In Fig. 3 ist ein weiterer vergrößerter Ausschnitt des in Fig. 1 dargestellten Druckmeßgeräts dargestellt, der die erste und die zweite Membran 11, 13 und die Überwachungseinheit 17 enthält. Bei dem in Fig. 3 dargestellten Druckmeßgerät weist die Überwachungseinheit 17 einen Kondensator auf, dessen Kapazität von einem Abstand zwischen der ersten und der zweiten Membran abhängt. Der Kondensator weist zwei Elektroden 25, 27 auf. Eine Elektrode 25 ist auf der zweiten Membran 13 angeordnet. Die weitere Elektrode 27 ist gegenüber von der ersten Elektrode 25 auf einer meßelement-zugewandten Seite des Zwischenraums 15 angeordnet. In dem dargestellten Ausführungsbeispiel ist die Elektrode 25 auf einem äußeren Rand der zweiten Membran 13 angeordnet. Die weitere Elektrode 27 ist auf der ringscheiben-förmigen Oberfläche des Druckmittlers 3 angeordnet. Während die weitere Elektrode 27 vorzugsweise gegenüber dem Druckmittler 3 isoliert aufgebracht ist, kann die Elektrode 25 auch unmittelbar durch die zweite Membran 13 selbst gebildet sein. Das bietet den Vorteil, daß keine Elektrode nachträglich aufgebracht werden muß und auch deren elektrischer Anschluß entfallen kann. Die Membran 13 liegt in letzterem Fall vorzugsweise auf einem festen Bezugspotential, z.B. auf Masse.

Auch hier ist der Zwischenraum 15 im Normalbetrieb evakuiert. Wird die zweite Membran 13 jedoch beschädigt oder zerstört, wird das Vakuum aufgehoben, und es ändert sich -bedingt durch eine rücktreibende Kraft der zweiten Membran 13-der Abstand zwischen den beiden Elektroden 25, 27.

An den Kondensator ist eine elektronische Schaltung 29 angeschlossen, die dazu dient, zu erkennen, ob sich die Kapazität des Kondensators ändert. Es kann z.B. eine einfache Kapazitätsmeßschaltung eingesetzt werden. Die elektronische Schaltung 29 weist Anschlußleitungen 24 auf, über die ein einer Kapazitätsänderung entsprechendes Signal einer weiteren Verwendung zur Verfügung steht. Es kann z.B. eingesetzt werden, um die Beschädigung zu melden und/oder einen Alarm auszulösen.

In Fig. 4 ist ein weiterer vergrößerter Ausschnitt des in Fig. 1 dargestellten Druckmeßgeräts dargestellt, der die erste und die zweite Membran 11, 13 und die Überwachungseinheit 17 enthält. Bei dem hier dargestellten Ausführungsbeispiel ist der Zwischenraum 15 nicht evakuiert, sondern mit einer Flüssigkeit ausgefüllt. Die Flüssigkeit ist so auszuwählen, daß ein Austreten einer geringen Menge vollkommen unbedenklich ist. Da die Flüssigkeitsmenge aufgrund des geringen Zwischenraumvolumens sehr gering ist, sind eine Vielzahl von Flüssigkeiten einsetzbar. Während bei der Flüssigkeit, mit der der Druckmittler 3 gefüllt ist, deren physikalische Eigenschaften, insb. deren Kompressiblilität und deren thermischer Ausdehnungskoeffizient, aufgrund der großen Menge, eine wichtige Rolle für die Meßgenauigkeit spielen und daher nicht alle Flüssigkeiten eingesetzt werden können, sind die physikalischen Eigenschaften der Flüssigkeit, mit der der Zwischenraum 15 gefüllt wird aufgrund der geringen Flüssigkeitsmenge unerheblich. Entsprechend lassen sich viel leichter Flüssigkeiten finden, die der Betreiber für unbedenklich hält.

Bei dem in Fig. 4 dargestellten Ausführungsbeispiel wird mit der Überwachungseinheit 17 eine Veränderung einer Konsistenz der Flüssigkeit überwacht.

Hierzu eignet sich besonders ein optischer Sensor 31, der beispielsweise durch ein in der ringscheiben-förmigen Oberfläche des Druckmittlers 3 eingelassenes Fenster 33 optische Signale in den Zwischenraum 15 sendet, die an der zweiten Membran 13 zurück zum Sensor 31 reflektiert werden.
Der optische Sensor 31 detektiert z.B. ein Veränderung eines Brechungsindexes der Flüssigkeit oder stellt eine Veränderung eines Trübungsgrades der Flüssigkeit fest.
Der optische Sensor 31 kann auch dazu dienen eine Veränderung einer Laufzeit eines optischen Signals vom optischen Sensor 31 zur zweiten Membran 13 und zurück zu ermitteln.

Auch hier ist wieder eine elektronische Schaltung vorgesehen, die die überwachte Veränderung in ein entsprechendes Signal umwandelt und über Anschlußleitungen 24 einer weiteren Verwendung zur Verfügung stellt.

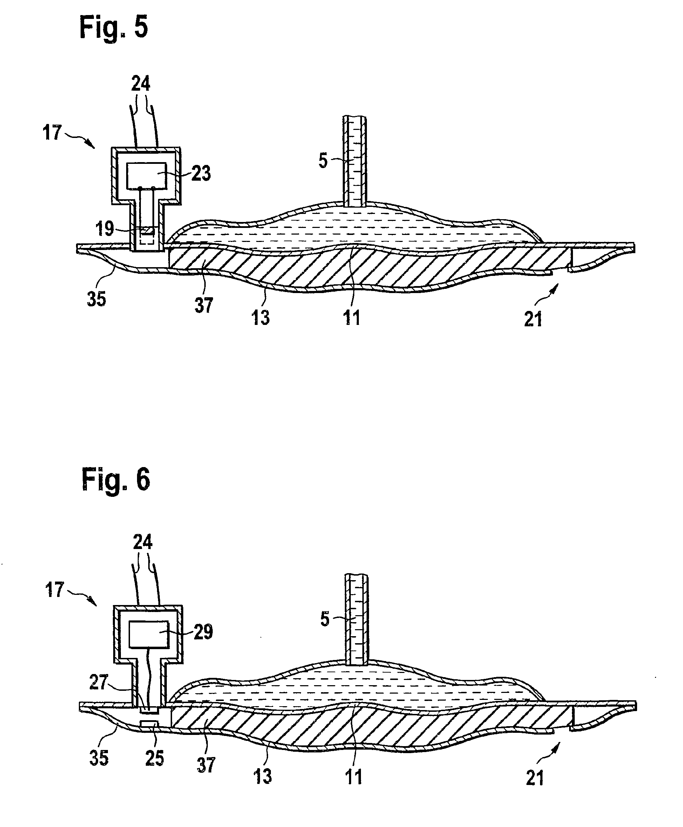

Fig. 5 zeigt einen weiteren Ausschnitt des in Fig. 1 dargestellten Druckmeßgeräts. Die zweite Membran 13 weist einen größeren Durchmesser als die erste Membran 11 auf. Ein äußerer ringscheibenförmigen Rand 35 der zweiten Membran 13 liegt einer an die erste Membran 11 angrenzenden ringscheibenförmigen Oberfläche des Druckmittlers 3 gegenüber.

Der von dem Rand eingeschlossene Teil des Zwischenraums 15 zwischen der ersten und der zweiten Membran 11, 13 ist mit einem Feststoff 35 gefüllt. Als Feststoff 35 eignet sich z.B. ein Elastomer, z.B. ein Silikonelastomer.

Da eine Überwachung in dem feststoff-gefüllten Teil des Zwischenraums 15 nur schwerlich möglich ist, wird die Überwachungseinheit 17 hier eingesetzt, um einen durch den äußeren Rand 35 der zweiten Membran 13 definierten Randbereich auf durch eine Zerstörung der zweiten Membran 13 verursachte Veränderungen zu überwachen.

Genau wie bei den in den Figuren 2 und 3 dargestellten Ausführungsbespielen ist auch hier der Zwischenraum 15 zwischen der ersten und der zweiten Membran 11, 13 evakuuiert, und die von der Überwachungseinheit 17 überwachte Veränderung eine Aufhebung des Vakuums.

Dabei kann, analog zu dem in Fig. 2 dargestellten Ausführungsbeispiel, ein Druckschalter 19 vorgesehen sein, der dazu dient, einen Druckanstieg im Randbereich des Zwischenraums 15 zu erfassen. Dies ist in Fig. 5 dargestellt.

Ebenso kann, analog zu dem in Fig. 3 dargestellten Ausführungsbeispiel, ein Kondensator vorgesehen sein, der eine auf dem Rand 35 der zweiten Membran 13 angeordnete Elektrode 25 aufweist, und dessen Kapazität von einem Abstand zwischen dem Rand 35 und der gegenüberliegenden Oberfläche des Druckmittlers 3 abhängt. Dies ist in Fig. 6 dargestellt.

Das zu den in den Figuren 2 und 3 dargestellten Überwachungseinheiten 17 gilt für die in den Figuren 5 und 6 dargestellten Überwachungseinheiten 17 entsprechend.

## Patentansprüche

1. Druckmeßgerät mit
- einem Meßelement (1) und
- einem dem Meßelement (1) vorgeschalteten Druckmittler (3) mit
-- einer ersten Membran (11),
-- einer unmittelbar auf einer meßelement-abgewandten Seite der ersten Membran (11) angeordneten zweiten Membran (13),
--- die parallel zu der ersten Membran (11) verläuft, und
- einer Überwachungseinheit (17),
-- die einen durch die erste und die zweite Membran (11, 13) begrenzten Zwischenraum (15) auf durch eine Zerstörung der zweiten Membran (13) verursachte Veränderungen überwacht, wobei ferner
der Zwischenraum (15) zwischen der ersten und der zweiten Membran (11, 13) mit einer Flüssigkeit gefüllt ist, und die von der Überwachungseinheit (17) überwachte Veränderung eine Änderung einer Konsistenz der Flüssigkeit ist.

2. Druckmeßgerät nach Anspruch 1, bei dem der
die Überwachungseinheit (17) einen optischen Sensor (31) aufweist, der dazu dient eine Veränderung eines Brechungsindexes der Flüssigkeit oder eines Trübungsgrades der Flüssigkeit festzustellen.

3. Druckmeßgerät nach Anspruch 2, bei dem der
die Überwachungseinheit (17) einen optischen Sensor (31) aufweist, der dazu dient eine Veränderung einer Laufzeit eines optischen Signals vom optischen Sensor (31) zur zweiten Membran (13) und zurück zu ermitteln.

## Claims

1. A pressure measuring instrument with
- a measuring element (1) and
- a pressure transmitter (3) which is connected upstream of the measuring element (1) and has
- - a first diaphragm (11),
- - a second diaphragm (13) which is arranged directly on a side of the first diaphragm (11) remote from the measuring element and
- - - which extends parallel to the first diaphragm (11), and
- a monitoring unit (17)
- - which monitors a space (15), bounded by the first and the second diaphragm (11, 13), for changes caused by destruction of the second diaphragm (13), wherein
the space (15) between the first and the second diaphragm (11, 13) is also filled with a liquid, and the change monitored by the monitoring unit (17) is a change in a consistency of the liquid.

2. A pressure measuring instrument according to claim 1, in which the monitoring unit (17) has an optical sensor (31) which serves to detect a change in a refractive index of the liquid or in a degree of turbidity of the liquid.

3. A pressure measuring instrument according to claim 2, in which the monitoring unit (17) has an optical sensor (31) which serves to detect a change in a transit time of an optical signal from the optical sensor (31) to the second diaphragm (13) and back.

## Revendications

1. Capteur de pression avec
- un élément de mesure (1) et
- placé en amont de l'élément de mesure (1), un séparateur (3) avec
-- une première membrane (11),
-- une deuxième membrane (13) disposée directement sur un côté opposé à l'élément de mesure de la première membrane (11),
--- qui est parallèle à la première membrane (11),
et
- une unité de surveillance (17),
-- qui surveille un espace intermédiaire (15) délimité par la première et la deuxième membrane (11,13) en vue d'éventuels changements occasionnés par une destruction de la deuxième membrane (13),
l'espace intermédiaire (15) entre la première et la deuxième membrane (11, 13) étant rempli d'un liquide, et le changement surveillé par l'unité de surveillance (17) étant un changement de consistance du liquide.

2. Capteur de pression selon la revendication 1, pour lequel
l'unité de surveillance (17) comporte un capteur optique (31), qui sert à déterminer un changement d'un indice de réfraction du liquide ou d'un degré de turbidité du liquide.

3. Capteur de pression selon la revendication 2, pour lequel
l'unité de surveillance (17) comporte un capteur optique (31), qui sert à déterminer un changement d'un temps de propagation d'un signal optique du capteur optique (31) correspondant à la distance aller-retour jusqu'à la deuxième membrane (13).
